# EUROPÄISCHE PATENTANMELDUNG

(11) **EP 0 960 813 A2**
(43) Veröffentlichungstag der Anmeldung: **01.12.1999**
(21) Anmeldenummer: 99110103.1
(22) Anmeldetag: 25.05.1999
(51) Int. Cl.: B64F 1/08

(54) **Schleppwinde für insbesondere Hängegleiter, Gleitschirme und Leichtflugzeuge**

(30) Priorität: 25.05.1998 DE 19822982
(71) Anmelder: Schuhwerk, Christoph, 86476 Neuburg/Kammel (DE)
(72) Erfinder: Schuhwerk, Christoph, 86476 Neuburg/Kammel (DE)
(74) Vertreter: Fiener, Josef

(57) **Zusammenfassung**

Zur Verbesserung einer Schleppwinde, insbesondere für Hängegleiter, Gleitschirme und Leichtflugzeuge mit
- einem Gestell (1, 2),
- einer antreibbaren Seiltrommel (3) zum Ausgeben bzw. Aufnehmen eines Seils (7) und
- einer Bremseinrichtung zum Abbremsen der Rotation der Seiltrommel (3), wird vorgeschlagen, daß die Bremseinrichtung eine Bandbremse (11 - 13) ist.

## Beschreibung

Die Erfindung betrifft eine Schleppwinde für insbesondere Hängegleiter, Gleitschirme und Leichtflugzeuge gemäß dem Oberbegriff des Anspruchs 1.

Derartige Fluggeräten werden oftmals mit Hilfe von Fahrzeugen angeschleppt. Dazu sind auf den Fahrzeugen Schleppwinden befestigt, von denen aus vor und während des Anschleppens von einer Seiltrommel Seil ausgegeben wird. Nachdem das Seil am Fluggerät ausgeklinkt wurde, wird es mittels eines Kurbelmechanismus oder eines an der Seiltrommel befestigten Motors eingezogen.

Zur Regulierung der Zugspannung zwischen dem hochzuziehenden Fluggerät und dem Fahrzeug bzw. der Schleppwinde gibt es Schleppwinden, bei denen die Drehung der Seiltrommel mittels einer Trommel- oder Scheibenbremse abgebremst werden kann. Die erforderliche und geeignete Zugspannung ist vom Gewicht des Fluggerätes und des Piloten abhängig.

Die bislang bekannten Bremsmechanismen haben jedoch den Nachteil, daß keine feste Zugspannung sondern nur eine feste Bremskraft voreinstellbar ist. Das Bremsen wird überwiegend "nach Gefühl" vorgenommen. Bei unregelmäßigem, stoßhaftem Zug durch das Schleppfahrzeug oder insbesondere bei böigen Winden oder dem Durchfliegen von Bereichen mit starken thermischen Abrissen führt dies zu ruckhaften Zugspannungsveränderungen, die vor allem für den Piloten unangenehm, aber auch für das Fluggerät, das Schleppseil und die Schleppwinde schädlich sind. Beim Anschleppen von Hängegleitern in z. B. den Savannen Afrikas kommt es sogar sehr häufig zum Riß der Schleppseile, was zu einer zusätzlichen Gefährdung des angeschleppten Piloten und des Bedienungspersonals an der Schleppwinde führt.

Werden kurz hintereinander viele Schleppvorgänge durchgeführt, bei denen jeweils durchgehend gebremst werden muß, so besteht die Gefahr der Überhitzung der Bremsen. Ausreichend zuverlässige Kühlmechanismen, die variabel und auch im freien Gelände mit geringem Aufwand betreibbar sind sowie dabei zudem wenig Energie für z. B. Kühlkreisläufe verbrauchen, fehlen bei den bekannten Schleppvorrichtungen.

Weiterhin sind die bekannten Mechanismen zum Aufwickeln des Seils beim Einholen nicht zufriedenstellend, da das Seil in der Regel nicht gleichmäßig genug auf der Seiltrommel aufgewickelt wird. Zwar sind, z. B. aus DE 94 01 104 U1, angetriebene Trommeln mit einem Seilführungsmechanismus unter Verwendung eines Schneckengetriebes bekannt, jedoch ist ein parallel zum Umfang der Seiltrommel geführtes Schneckengetriebe für den Einsatz bei Seiltrommeln für den Flugbetrieb mit stark wechselndem Seilausgabewinkel schlecht geeignet. Zudem ist der Aufbau sehr komplex gestaltet.

Die Aufgabe der Erfindung besteht darin, eine verbesserte Schleppwinde für insbesondere Fluggeräte wie Hängegleiter, Gleitschirme und Leichtflugzeuge bereitzustellen.

Diese Aufgabe wird durch eine Schleppwinde und einen Antrieb dafür mit den Merkmalen der Ansprüche 1, 12 bzw. 20 gelöst.

Eine solche Schleppwinde ermöglicht insbesondere eine verbesserte zugspannungsvoreinstellung, wobei ruckartige Stöße, die vom Fluggerät oder vom Zugfahrzeug ausgehen, durch die Bandbremse ausgeglichen werden.

Vorteilhafte Ausgestaltungen sind Gegenstand von Unteransprüchen.

Der besondere Vorteil eines solchen Verdampfungskühlers mit Wasser als Kühlmittel liegt darin, daß Wasser an vielen Orten problemlos verfügbar ist und zudem zum Antreiben von Kühlaggregaten keine zusätzliche Energie bereitzustellen ist. Auch entfällt ein aufwendiger und dementsprechend mit Blick auf Verschleiß oder Beschädigungen anfälliger Aufbau. Gegenüber Kühlkreisläufen entfällt auch die Gefahr des Auslaufens gesundheits- und/oder umweltschädlicher Kühlmittel. Die Öffnung in der Bremstrommel ermöglicht einerseits das Einleiten von Kühlwasser und andererseits den Austritt von erhitztem Wasserdampf.

Zudem läuft das Wasser durch die Rotation der Bremstrommel gleichmäßig über deren innere Oberflächen verteilt, so daß eine gleichmäßige Kühlung gewährleistet ist. Im Falle eines Wassermangels entwickelt sich wegen der verstärkten Wassererhitzung eine starke Wasserdampfbildung, die das Bedienungspersonal aufmerksam macht, daß Wasser in die Bremstrommel nachzufüllen ist.

Durch den Aufbau der Bremseinrichtung mit einer Bandbremse, die mit einer Bremskraft über ein zwischengeschaltetes Federelement beaufschlagt wird, werden plötzlich auftretende Kraftstöße abgefedert, die von einem Fluggerät oder von einem Schleppfahrzeug ausgehen, so daß die effektive Zugkraft gleichmäßig bleibt und dadurch eine Gefahr der Beschädigung der Geräte oder eine Verletzungsgefahr für den Piloten deutlich verringert werden. Bei sich länger ändernden Zugspannungsbedingungen verbleibt so für die bedienende Person genügend Zeit, eine Nachjustierung der Bremskraft vorzunehmen.

Durch die Verwindung bzw. Verdrehung des auf einer Seite vorgespannten Bremsbandes erfolgt beim Abrollen des Schleppseils ein Kräfteausgleich zwischen dem Reibwert des Bremsbandes auf dem Bremszylinder und der ebenfalls federbeaufschlagten Zugkraftanzeige, die an der anderen Seite des Bremsbandes befestigt ist.

Die Verwendung eines einzigen Steuerhebels zum Bremsen und zum Betätigen einer Kupplung für einen Motor vereinfacht einerseits den Aufbau der Schleppwinde und andererseits die Bedienung von dieser.

Die Befestigung insbesondere des Steuerhebels, der Anzeigeeinrichtung für die Bremskraft und des Seilführungsmechanismus mit der Kulissenführung an einem einzigen vorzugsweise galgenförmigen Traggestell ermöglicht einen sehr kompakten und einfachen Aufbau der Schleppwinde.

Natürlich ist ein Einsatz der Schleppwinde auch anderweitig, wie beispielsweise beim Wassersport denkbar.

Ein Ausführungsbeispiel der Erfindung wird nachfolgend unter Bezug auf die Zeichnung beispielhaft beschrieben. Es zeigen:
- Fig. 1: eine Schleppwinde in einer ersten perspektivischen Ansicht von der Bedienungsseite aus,
- Fig. 2: die Schleppwinde der Fig. 1 von der gegenüberliegenden Seilausgabeseite aus,
- Fig. 3: eine schematische Darstellung einer Brems- und Anzeigeeinrichtung,
- Fig. 4: einen Schnitt durch eine Bremstrommel,
- Fig. 5: eine schematische Darstellung der Anlenkung eines gemeinsamen Steuerhebels für die Bremseinrichtung und eine Motorkupplung und
- Fig. 6: eine schematische Darstellung einer Seilführungseinrichtung.

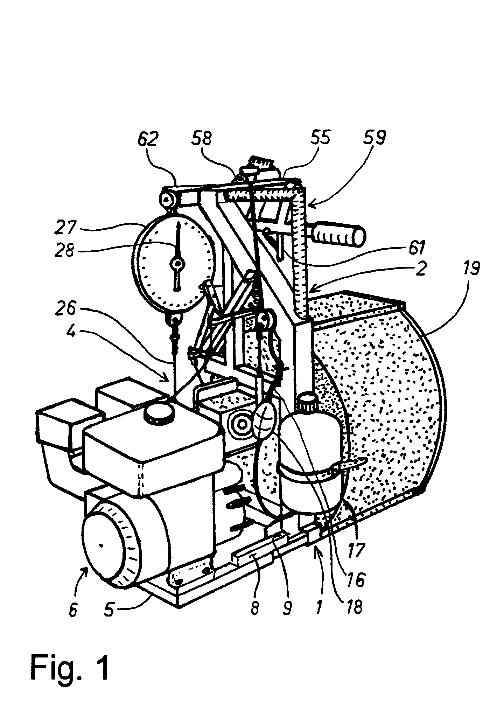

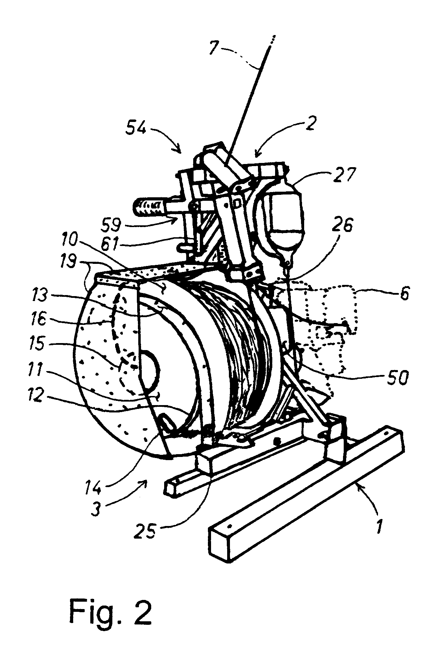

Wie aus den Fig. 1 und 2 ersichtlich, weist die Schleppwinde ein Grundgestell 1 auf, von dem aus ein im wesentlichen galgenartiges Traggestell 2 nach oben hin führt. Die Richtungsbezeichnungen dienen hier nur zur Veranschaulichung der einzelnen Bauteile im Zusammenhang mit den vorliegenden Figuren. Das Traggestell 2 trägt insbesondere eine Seiltrommel 3, die an einer hier nicht näher beschriebenen Lager- und Getriebeeinrichtung 4 gelagert ist, und verschiedene Bedienungseinrichtungen.

Seitlich ist an das Grundgestell 1 ein Motorgestell 5 mit einem Motor 6 lösbar angesetzt. Die Befestigung des Motorgestells 5 an dem Grundgestell 1 erfolgt z. B. über einen Motorgestell-Querträger 8, der an dem Motorgestell 5 befestigt ist und über ein Teil des Grundgestells 1 greift. Durch Bohrungen, die entsprechend im Motorgestell-Querträger 8 des Motorgestells 5 und im übergriffenen Teil des Grundgestells 1 führen, ist zur Befestigung ein Gewindebolzen 9 führbar, der zugleich zum Festlegen der beiden Gestellabschnitte 1 bzw. 5 an einem Fahrzeug verwendbar ist. Der Motor 6 ist z. B. über eine Rutschkupplung an die Lager- und Getriebeeinrichtung 4 und darüber an die Seiltrommel 3 ankoppelbar, um ein an der Seiltrommel 3 befestigtes Seil 7 auf diese aufwickeln zu können. Anstelle eines Motors 6 können alternativ z. B. auch eine Handkurbel oder eine Zapfwelle eines Schleppfahrzeugs an die Lagereinrichtung 4 angekoppelt werden.

Die Seiltrommel 3 besteht im wesentlichen aus einem Seiltrommelzylinder, der zwischen zwei Trommelbordwänden 10, 10' sitzt. Die Seiltrommel 3 ist antreibbar an einer Hauptwelle 29 gelagert, die den Seiltrommelzylinder trägt oder die an der Trommelbordwand 10' befestigt ist, die der Lager- und Getriebeeinrichtung 4 zugewandt ist.

An der Trommelbordwand 10', die von der Lager- und Getriebeeinrichtung 4 abgewandt ist, ist außenseitig eine Bremstrommel drehfest befestigt. Alternativ kann die Bremstrommel auch anstelle an der Seiltrommel 3 an der Hauptwelle 29 drehfest befestigt werden, auf der die Seiltrommel wiederum drehfest sitzt.

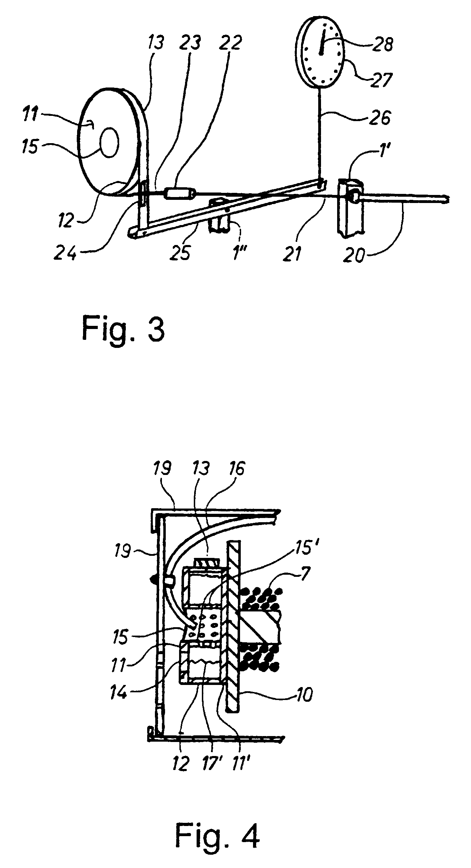

Die Bremstrommel, die in Fig. 4 auch im Schnitt dargestellt ist, besteht vorzugsweise aus zwei kreisrunden Bremstrommelstirnwänden 11, 11', zwischen deren Außenumfang sich der eigentliche Bremszylinder 12 erstreckt, um den ein Bremsband 13 führt. Die innenseitige Bremstrommelstirnwand 11' dient in der bevorzugten Ausführungsform zur direkten Befestigung an der äußeren Trommelbordwand 10 der Seiltrommel 3. Dadurch kann eine vom Bremsband 13 auf den Bremszylinder 12 übertragene Bremskraft weiter über die innenseitige Bremstrommelstirnwand 11' und die Trommelbordwand 10 auf die Seiltrommel 3 übertragen werden.

Die andere, außenseitige Bremstrommelstirnwand 11 weist zum Ausbilden einer Kühlungseinrichtung mit eigenständiger erfinderischer Bedeutung nahe ihrem Umfang ein durchsichtiges Sichtfenster 14 und eine zentrale Öffnung 15 auf. In diese zentrale Öffnung 15 führt ein Schlauch 16 hinein, über den aus einem Wassertank 17 Wasser 17' als Kühlmittel in die Bremstrommel eingefüllt werden kann. Der Wassertank 17 ist vorzugsweise durchsichtig und auf der Bedienungsseite der Schleppwinde am Traggestell 2 befestigt. Zum Pumpen von Wasser aus dem Wassertank 17 in die Bremstrommel dient eine Wasserpumpe 18, die als Handpumpe in den Schlauch 16 eingesetzt ist. Der Wasserstand in der Bremstrommel ist über das Sichtfenster 14 überprüfbar.

Alternativ können natürlich auch beliebige andere Arten von Pumpen verwendet werden. Auch kann der Wassertank im oberen Bereich des Traggestells 2 befestigt werden, so daß Wasser durch das bloße Betätigen eines Auslaßventils in die tiefer gelegene Öffnung 15 der Bremstrommel einfließen kann. Natürlich können auch automatische Wasserstandsmesser und Nachfülleinrichtungen eingebaut werden.

Damit das Wasser zwar in die Bremstrommel eintreten, bei insbesondere langsamen Rotationen jedoch nicht wieder aus dieser herausfließen oder herausspritzen kann, ist zwischen den beiden Bremstrommelstirnwänden 11 bzw. 11' eine Dichtung, beispielsweise eine Labyrinthdichtung oder ein von der Bremszylinderinnenwand beabstandetes Lochblech 15' eingesetzt.

Vorteilhafterweise ist der Schlauch 16 größtenteils von einer Seiltrommelabdeckung 19 verdeckt geführt, die die Seiltrommel zum Schutz des aufgewickelten Seils 7 bis auf den Seilausführungsbereich umschließt. Dadurch ist zudem auch der Schlauch 16 vor Beschädigungen geschützt. Eine Seiltrommelabdeckung 19, die aus einem Lochblech gefertigt ist, ermöglicht einerseits eine besonderes einfache Befestigung des Schlauchs 16 und andererseits eine gute Belüftung der umschlossenen Seiltrommel 3.

Wie insbesondere aus Fig. 3 ersichtlich, wird die Bremskraft zum Spannen des Bremsbands 13 mittels eines Bremsbowdenzugs 20 übertragen. Der Bowdenzugdraht 21, der aus dem Ende des Bremsbowdenzugs 20 herausführt, das an einem Trägerelement 1' des Grundgestells 1 befestigt ist, ist an einem Federelement 22 befestigt. An dem anderen Ende des Federelements 22 ist wiederum ein erstes Ende des Bremsbands 13 über ein Drahtstück 23 befestigt.

Vorzugsweise führen das Drahtstück 23 und das daran befestigte erste Ende des Bremsbandes 13 vertikal zum untersten Abschnitt des Bremszylinders 12 hin. Das Bremsband 13 führt in einem Dreiviertelkreis um den Bremszylinder 12 herum und dann vorzugsweise vertikal nach unten hin von diesem weg. Nahe dem zweiten, nach unten führenden Ende des Bremsbands 13 ist in diesem ein Schlitz 24 ausgebildet, durch den das Drahtstück 23, das zum ersten Ende des Bremsbands 13 hinführt, ungehindert hindurchführt.

Das zweite, untere Ende des Bremsbands 13 ist an einem Ende eines Waagebalkens 25 gelagert. Der Waagebalken 25 ist wiederum an einem weiteren Trägerelement 1'' des Grundgestells 1 gelagert, wobei es um den Lagerpunkt verschwenkbar ist. Am anderen Ende des Waagebalkens 25 ist ein Federwaagenzug 26 gelagert, der nach oben hin zu einer Federwaage 27 führt, die am Traggestell 2 befestigt ist. Ein Zeiger 28 zeigt die über den Bremsbowdenzug 20 voreingestellte Bremskraft an, die auf den Bremszylinder 12 bzw. das geschleppte Fluggerät einwirkt.

Alternativ kann das zweite Ende des Bremsbands 13 auch direkt an einem Zugdraht einer Federwaage befestigt sein. Dabei würde jedoch der Einsatz von dem Waagebalken 25 und somit die Ausnutzung von Hebelkräften und die Möglichkeit einer einfachen Kraftjustierung durch das Verlagern der Anlenkungspunkte längs dem Waagebalken 25 entfallen.

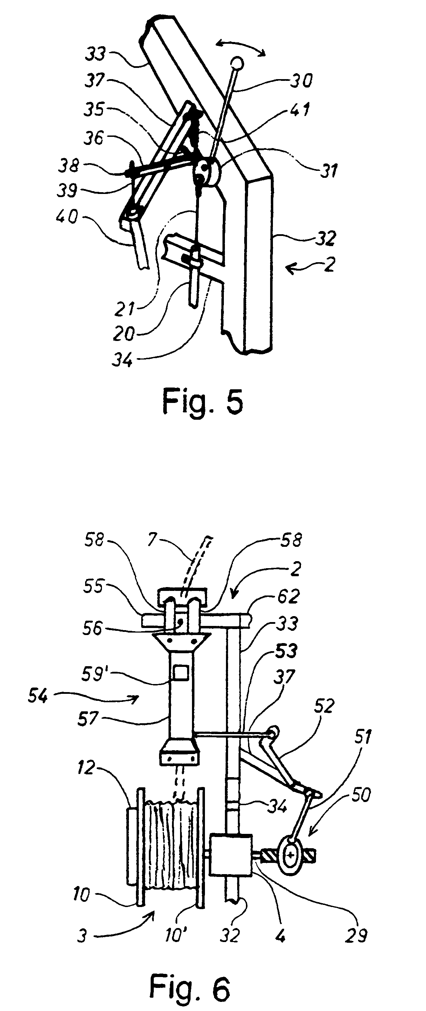

Zur Steuerung der Zugkraft bzw. der Bremskraft dient ein Steuerhebel 30 eines in Fig. 5 dargestellten Steuermechanismus mit eigenständiger erfinderischer Bedeutung. Der Steuerhebel 30 endet in einem im wesentlichen länglichen oder runden Lagerelement 31, das nahe dem Ansatzpunkt des Steuerhebels 30 an dem Traggestell 2 gelagert ist. Der Lagerpunkt kann sich dabei z. B. seitlich an einem ersten, aufragenden Tragelement 32 des Traggestells 2 oder, wie dargestellt, an einem zweiten, von diesem seitlich schräg nach oben wegragenden Tragelement 33 befinden. Vorzugsweise am vom Drehpunkt des Lagerelement 31 entferntesten Ende ist an diesem das zweite Ende des Bowdenzugdrahts 21 des Bremsbowdenzugs 20 befestigt. Das Ende des Bowdenzuges 20, aus dem dieser Bowdenzugdraht 21 herausragt, ist tiefer gelegen am aufragenden Tragelement 32 des Traggestells 2 oder einem seitlich davon wegragenden weiteren Tragelement 34 befestigt. Durch diese Anordnung wird der Bowdenzugdraht 21 und damit über diesen letztendlich das Bremsband 13 verstellt, wenn der Steuerhebel in einer ersten Richtung verschwenkt wird.

Zusätzlich ragt vom Lagerelement 31 seitlich ein Anschlagstift 35 weg. Wenn der Steuerhebel 30 in der entgegengesetzten, zweiten Richtung über eine Grundstellung hinaus zurückverschwenkt wird, so drückt der Anschlagstift 35 unter Ausnutzung von Hebelkräften gegen ein Ende eines Motorbowdenzug-Aufhängebalkens 36. Der Motorbowdenzug-Aufhängebalken 36 ist verschwenkbar am Traggestell 2 gelagert, und zwar vorzugsweise an einem Motorbowdenzug-Tragelement 37, das vom zweiten, schräg nach oben verlaufenden Tragelement 33 seitlich und schräg nach unten hin absteht. Das zweite Ende des Motorbowdenzug-Aufhängebalkens 36 weist eine Einkerbung 38 auf, in die das Ende eines Motorbowdenzugdrahts 39 eingesetzt ist. Ein schräg nach unten verlaufendes Motorbowdenzug-Tragelement 37 bietet den besonderen Vorteil daran auch das Ende des Motorbowdenzugs 40 befestigen zu können. Der Motorbowdenzug 40 überträgt die auf ihn wirkende Kraft auf eine Kupplung, die den Motor 6 mit der Lager- und Getriebeeinrichtung 4 und der Seiltrommel 3 verbindet. Um den Motorbowdenzugdraht 39 in eine Grundstellung vorzuspannen, ist am ersten Ende des Motorbowdenzug-Aufhängebalkens 36 ein Federelement als eine Gegenfeder 41 befestigt, die den Motorbowdenzug-Aufhängebalkens 36 gegenüber dem Traggestell 2 federbeaufschlagt.

Der Kupplungs- bzw. Motorbowdenzug 40 und der aus diesem herausragende Bowdenzugdraht 39 sind lösbar befestigt, damit das Motorgestell 5 mit dem Motor 6 bei Bedarf vom Grundgestell 1 und der Seiltrommel 3 abgenommen oder modular vertrieben werden kann.

Bei diesem Aufbau kann mit dem Steuerhebel 30 bei dessen Betätigung von einer inaktiven Grundstellung aus in der ersten Richtung die Seiltrommel 3 gebremst und bei dessen Betätigung von der inaktiven Grundstellung aus in der zweiten Richtung der Motor 6 an die Seiltrommel 3 angekuppelt werden, um das Seil 7 auf die Seiltrommel 3 aufzuwickeln.

Zur Führung des Seils 7, die eine eigenständige erfinderische Bedeutung hat, dient, wie aus den Fig. 1 und 2 sowie insbesondere Fig. 6 ersichtlich, eine Kulissenführung, die abhängig von der Rotation der Seiltrommel 3 gesteuert wird. Die Hauptwelle 29 führt von der Seiltrommel 3 aus in die Getriebe- und Lagereinrichtung 4 hinein, wobei sie im Lagerungsbereich eine Keilnut aufweist, über die sie zur Aufnahme einer Drehkraft vom Motor 6 mit dem Getriebe verbunden ist. Die Verbindung des Motors 6 zur Getriebe- und Lagereinrichtung 4 ist aus Übersichtlichkeitsgründen nicht dargestellt.

Die Hauptwelle 29 führt weiter durch die Getriebe- und Lagereinrichtung 4 hindurch und endet in einem drehfest mit der Hauptwelle 29 verbundenen Schneckengetriebe 50. Das Schneckengetriebe 50 ist Bestandteil der Aufspuleinrichtung, die eine vorzugsweise ellipsenförmige Kulissenführung bzw. Kulissenrolle antreibt. Vom Schneckengetriebe 50 aus führt eine Kurbelstange 51 zum kurzen, abgewinkelten Ende einer ersten, im wesentlichen nach oben hin führenden Schub- und Zugstange 52. In deren Abwinkelungs- bzw. Knickbereich ist diese Schub- und Zugstange 52 am Tragrahmen 2 gelagert, und zwar vorzugsweise am freien Ende des Motorbowdenzug-Tragelements 37, das somit eine Doppelfunktion übernimmt. Durch diese Lagerung wird die leicht rotierende Auf- und Abbewegung der Kurbelstange in eine seitliche Hin- und Herbewegung umgesetzt.

An dem anderen Ende der ersten Schub- und Zugstange 52 ist das erste Ende einer zweiten, im wesentlichen horizontal verlaufenden Schub- und Zugstange 53 gelagert. Das zweite Ende der zweiten Schub- und Zugstange 53 ist an einer Kapp- und Seilführungseinrichtung 54 gelagert und überträgt die Hin- und Herbewegung der ersten Schub- und Zugstange 52 auf diese.

Die Kapp- und Seilführungseinrichtung 54 ist verschwenkbar an einem Querträger 55 gelagert, der parallel zur Seiltrommelachse führend seitlich vom oberen, vorderen Ende des schräg nach oben verlaufenden Tragelements 33 des Traggestells 2 absteht. Vom Lagerpunkt bzw. der Lagerachse 56 am Querträger 55 aus führt ein Hohlkantrohr 55, in dessen unterem Abschnitt die zweite Schub- und Zugstange 53 gelagert ist, im wesentlichen nach unten hin. Das Seil 7 wird von der Seiltrommel 3 aus kommend durch dieses Hohlkantrohr 57 hindurch- und nach oben hin aus diesem herausgeführt. Dabei wird das Seil 7 am unteren Ende durch zwei Seilführungsrollen und am oberen Ende durch zwei zum Seil 7 schräg, insbesondere etwa 45° verlaufende Eingangsleitrollen 58 geführt, die den Reibungswiderstand minimieren. Durch diese Anordnung wird das Seil 7 bei rotierender Seiltrommel 3 durch die Kapp- und Seilführungseinrichtung 54 längs der Seiltrommelachse hin- und hergeführt und dadurch gleichmäßig ab- bzw. aufgewickelt.

Unterhalb des Querträgers 55 führt vom Hohlkantrohr aus ein Kappmechanismus 59 zur Bedienungsseite der Schleppwinde hin. In Fig. 6 ist davon lediglich die Schlagplatte 60 dargestellt, während in den Fig. 1 und 2 auch ein federbeaufschlagter Auslösehebel 61 dargestellt ist.

Ein Federwaagenträger 62 erstreckt sich etwa gegenüber vom Querträger 55 seitlich vom oberen, vorderen Ende des schräg nach oben verlaufenden Tragelements 33 des Traggestells 2 zur gegenüberliegenden Seite hin, um darüber auch die Federwaage 27 am Traggestell 2 befestigen zu können.

## Patentansprüche

1. Schleppwinde für insbesondere Hängegleiter, Gleitschirme und Leichtflugzeuge mit
- einem Gestell (1, 2),
- einer antreibbaren Seiltrommel (3) zum Ausgeben bzw. Aufnehmen eines Seils (7) und
- einer Bremseinrichtung zum Abbremsen der Rotation der Seiltrommel (3),
dadurch gekennzeichnet, daß
die Bremseinrichtung eine Bandbremse (11 - 13) ist.

2. Schleppwinde nach Anspruch 1,
dadurch gekennzeichnet, daß
die Bandbremse (11 - 13) flüssigkeitsgekühlt, vorzugsweise wassergekühlt ist und insbesondere eine Bremstrommel (11, 12) als Hohlkörper mit einer Öffnung (15) zum Einfüllen von Kühlflüssigkeit in einer Bremstrommelstirnwand (11) aufweist.

3. Schleppwinde nach Anspruch 2,
gekennzeichnet durch einen Kühlflüssigkeitstank, insbesondere Wassertank (17), von dem aus die Kühlflüssigkeit mittels vorzugsweise einer Handpumpe (18) in die Öffnung (15) in der Bremstrommelstirnwand (11) geleitet wird.

4. Schleppwinde nach Anspruch 2 oder 3,
dadurch gekennzeichnet, daß
die Bremstrommel (11, 12) in ihrem Innenraum zum Verhindern des Austritts von flüssiger Kühlflüssigkeit eine Labyrinthdichtung und/oder einen Einsatz (15') in Form vorzugsweise eines parallel und beabstandet zur Bremszylinderinnenwandung verlaufenden Lochblechs aufweist.

5. Schleppwinde nach einem der vorhergehenden Ansprüche, gekennzeichnet durch eine federbeaufschlagte Einrichtung (12, 13, 20, 22, 24, 27, 30) zur automatischen Zugkraftregelung der Bandbremse (11 - 13), die insbesondere ein um einen Bremszylinder (12) führendes Bremsband (13) aufweist, das zumindest einseitig, vorzugsweise beidseitig federbeaufschlagt festgelegt ist.

6. Schleppwinde nach einem der vorhergehenden Ansprüche,
dadurch gekennzeichnet, daß
das Bremsband (13) der Bandbremse (11 - 13) an seiner ersten Seite an einen Steuermechanismus, insbesondere einen Steuerhebel (30), zum Voreinstellen der Bremskraft gekoppelt ist, wobei die Kraft vorzugsweise mittels eines Bremsbowdenzugs (20, 21) übertragen wird.

7. Schleppwinde nach einem der vorhergehenden Ansprüche,
dadurch gekennzeichnet, daß
das Bremsband (13) der Bandbremse (11 - 13) an seiner zweiten Seite an eine Kraftanzeigeeinrichtung, insbesondere eine Federwaage (27) gekoppelt ist, wobei vorzugsweise zwischen die Kraftanzeigeeinrichtung und die Bandbremse (13) ein Hebelmechanismus gekoppelt ist.

8. Schleppwinde nach einem der vorhergehenden Ansprüche,
dadurch gekennzeichnet, daß
das Bremsband (13) der Bandbremse (11 - 13) nahe einem seiner Enden einen Längsschlitz (24) aufweist, durch den hindurch ein Befestigungsmittel (23) für sein anderes Ende führt.

9. Schleppwinde nach einem der Ansprüche 2 bis 8,
dadurch gekennzeichnet, daß
die Bremstrommel (11, 12) der Bandbremse an einer Antriebs- und Lagerwelle (29) der Seiltrommel (3) oder an einer Trommelbordwand (10) der Seiltrommel (3) drehfest befestigt ist.

10. Schleppwinde nach einem der vorhergehenden Ansprüche,
dadurch gekennzeichnet, daß zum Antreiben der Seiltrommel (3) eine Handkurbel, eine Kupplung zur Aufnahme einer Zapfwelle von einem Aggregat oder einem Fahrzeug oder ein Motorblock angekuppelt ist, wobei die Antriebseinrichtung (6) insbesondere austauschbar und abnehmbar angekuppelt ist.

11. Schleppwinde nach Anspruch 10,
dadurch gekennzeichnet, daß die Antriebseinrichtung (6) zum Antreiben der Seiltrommel (3) und die Bremseinrichtung zum Abbremsen und Festlegen der Seiltrommel (3) mittels eines gemeinsamen Steuerhebels (30) steuerbar sind.

12. Schleppwinde nach insbesondere einem der vorhergehenden Ansprüche,
dadurch gekennzeichnet, daß das Seil (7) mittels einer Seilführungseinrichtung (29, 50 - 58) geführt wird, die das Seil (7) abhängig von der Rotation der Seiltrommel (3) gleichmäßig von dieser abspult bzw. auf diese aufspult.

13. Schleppwinde nach Anspruch 12,
dadurch gekennzeichnet, daß die Seilführungseinrichtung (29, 50 - 58) ein Schneckengetriebe (50) mit einer Kulissenführung aufweist, dessen Schnecke insbesondere direkt auf der Welle (29) zum Antreiben und Lagern der Seiltrommel (3) sitzt.

14. Schleppwinde nach Anspruch 13,
dadurch gekennzeichnet, daß die Seilführungseinrichtung (29, 50 - 58) ein mehrteiliges Schub- und Zuggestänge (51, 52, 53) zum Umsetzen der Drehbewegung von der Kulissenführung (50) in eine Hin- und Herbewegung eines Seillagers (57, 58) im wesentlichen parallel zur Längsachse der Seiltrommel (3) aufweist.

15. Schleppwinde nach einem der Ansprüche 12 - 14,
dadurch gekennzeichnet, daß die Seilführungseinrichtung (29, 50 - 58) ein Seillager (57, 58) aufweist, das abhängig von der Rotation der Seiltrommel (3) im wesentlichen parallel zu deren Längsachse hin- und herbewegt wird, wobei das Seillager vorzugsweise ein Hohlrohr (57) mit insbesondere rundem oder eckigem Querschnitt und mit Seilführungsrollen (58) an dessen Einführungsende und/oder Ausführungsende aufweist.

16. Schleppwinde nach Anspruch 15,
dadurch gekennzeichnet, daß die Seilführungsrollen (58) zum Ausführen des Seils (7) aus der Schleppwinde schräg, insbesondere etwa 30° - 60°, vorzugsweise etwa 45° zur Seilsenkrechten angeordnet sind.

17. Schleppwinde nach einem der Ansprüche 14 - 16,
dadurch gekennzeichnet, daß in das Seillager (57, 58) eine Kappeinrichtung (59, 59', 61) zum Zertrennen des Seils in Notsituationen integriert ist.

18. Schleppwinde nach einem der vorhergehenden Ansprüche,
dadurch gekennzeichnet, daß das Gestell (1, 2) ein zentrales Traggestell (2) aufweist, das insbesondere im wesentlichen galgenförmig ausgebildet ist und an dem die Seiltrommel (3) und/oder ein Getriebe (4) für die Welle (29) der Seiltrommel (3) und/oder ein Antriebsaggregat (6) für die Seiltrommel (3) und/oder die Steuerungseinrichtung (30) der Bremseinrichtung und/oder die Anzeigeeinrichtung (27, 28) der Bremseinrichtung und/oder die Seilführungseinrichtung befestigt bzw. gelagert sind.

19. Schleppwinde nach einem der vorhergehenden Ansprüche,
dadurch gekennzeichnet, daß das Seil (7) aus Draht, Kunstfasern und/oder Naturfasern besteht.

20. Antriebsaggregat, insbesondere Verbrennungsmotor (6), für eine Schleppwinde nach einem der vorhergehenden Ansprüche.
